# EUROPEAN PATENT APPLICATION

(11) **EP 1 118 944 A1**
(43) Date of publication of application: **25.07.2001**
(21) Application number: 99943217.2
(22) Date of filing: 08.09.1999
(51) Int. Cl.: G06F 15/00, G06F 17/30, G06F 17/60

(54) **ADVERTISING SYSTEM USING INTERNET**

(30) Priority: 08.09.1998 JP 25363798
(71) Applicant: Kabushiki Kaisha NTTAD, Shibuya-ku, Tokyo 150-8314 (JP)
(72) Inventor: KAWANO, Masahiro, Tokyo 160-0022 (JP); INOUE, Yutaka, Tokyo 160-0022 (JP)
(74) Representative: von Puttkamer, Nikolaus
(86) International application number: JP9904878
(87) International publication number: WO0014646

(57) **Abstract**

When an advertiser wants to communicate advertising information to users' personal computers (4) from their server (3) through the Internet (1), they have to wait for users to try to access the server (3), and it is an inefficient way of advertisement. Therefore, an efficient system is provided in which communication programs capable of automatic login are installed in users' personal computers (4) so that the computers may automatically access the server (3) at predetermined time to receive latest advertising information through any operation by users.

## Description

### Technical Field

The present invention relates to an advertising system which sends advertising information from an advertising information sending apparatus serving as a server storing advertising information of manufacturers and the like to advertising information receiving apparatuses such as computers owned by individual users using the communication network of the Internet.

### Background Art

Conventionally, companies such as manufacturers advertise to individual general users using the communication network of the Internet. In such an advertising system, for example, a company opens a homepage with its advertisement in the advertisement sending apparatus (server) of the company itself or an agent that has made a contract so that advertising information is provided to users when they access the homepage. Alternatively, the mail addresses of users are registered in a company, advertising information is communicated from the company side to the mail address of each user, and the user receives E-mail addressed to him/her by operating on the provider where the mail address is set, thereby receiving the advertising information from the company.

In the conventional advertising systems using the communication network of the Internet, advertising information is not received by a user unless the user himself/herself operates to access the server on the company side or confirms whether the advertising information addressed to him/her has been communicated. This does not guarantee that advertising information that the company side wants to transmit is properly and quickly transmitted to each user and confirmed by the user. Hence, this system is not so efficient as an advertising means.

The present invention has been made in consideration of the above problem, and has as its object to provide an advertising system capable of properly transmitting advertising information to users. Disclosure of Invention

In order to solve the above problem, according to the present invention, there is provided an advertising system using the Internet, in which an advertising information sending apparatus and an advertising information receiving apparatus are connected through a communication network of the Internet, characterized in that the advertising information receiving apparatus comprises automatic login means for automatically accessing the advertising information sending apparatus at preset time to receive advertising information.

According to the present invention, even when the user does not operate the advertising information receiving apparatus to receive the advertising information, the advertising information is automatically received at the preset predetermined time, so the advertising information is properly and quickly communicated to the advertising information receiving apparatus.

When there are a plurality of companies that want to send advertising information, each advertising information receiving apparatus may sequentially access the advertising information sending apparatuses of the respective companies to receive the advertising information from each advertising information sending apparatus.

In addition, for example, when the company side wants to change the automatic access time set in the automatic login means, change information for changing settings for the automatic login means is transmitted simultaneously with sending the advertising information.

### Brief Description of Drawings

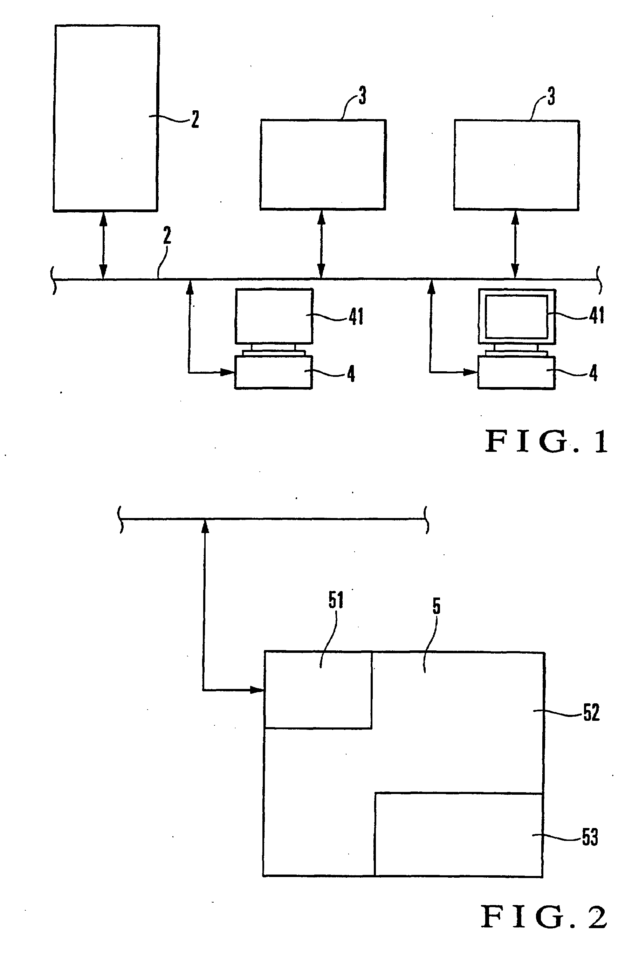

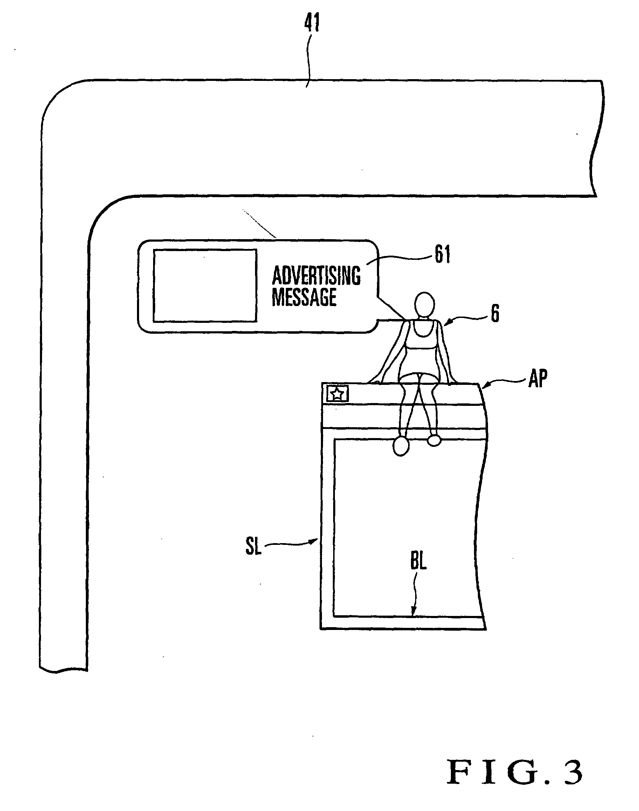

Fig. 1 is a view showing the arrangement of an embodiment of the present invention; Fig. 2 is a block diagram showing the structure of a communication program; and Fig. 3 is a view showing an example of a character.

### Best Mode of Carrying Out the Invention

Referring to Fig. 1, reference numeral 1 denotes a communication network of the Internet, through which a main server 2 for managing an advertising system according to the present invention and servers 3 of companies that want to send advertising information are connected. A single main server 2 suffices while a plurality of servers 3 are present in units of companies, and the individual servers 3 are connected to the communication network 1. Each server 3 corresponds to an advertising information sending apparatus. On the other hand, personal computers 4 owned by personal users are connected to the communication network 1. The personal computers 4 correspond to advertising information receiving apparatuses. Reference numeral 41 denotes a monitor of each personal computer 4. Advertising information is stored in each server 3. Pieces of advertising information with different contents are stored in the servers 3. A communication program 5 as an automatic login means having the structure shown in Fig. 2 is installed in each personal computer 4. The communication program 5 is formed from a connection program 51 for connecting to the communication network 3, a main program 52 common to all the servers 3, and data 53 which changes depending on the server 3. For example, when a company uses a specific person for TV and other commercial messages as an image character, data for displaying that person as the image character is contained in the data 53. In addition, time data for an access to the main server 2 or the server 3 of the company using the image character every predetermined time is contained in the data 53. When the communication program 5 is installed in the personal computer 4, for example, a character 6 shown in Fig. 3 is displayed. Simultaneously, the personal computer 4 automatically accesses, and the main server 2 issues an ID unique to each personal computer 4. The character 6 shown in Fig. 3 is a person. However, the character may be appropriately selected by the company that wants to send advertising information, and may be, e.g., an animation character. To install data related to the plurality of servers 3 in the personal computer 4, the data 53 of the communication program 5 is installed for each server 3. The connection program 51 and main program 52 are common to the data 53 and therefore only need be singly installed. Although the character 6 can be of any type, though it is preferably a character that the user would like to spontaneously install in his/her personal computer 4. When the user wants to install the character in his/her personal computer 4, he/she accesses the server 3 which stores the data of the desired character to download the communication program 5 from the server 3, or the company side records the communication program 5 on a storage medium such as a CD-ROM and distributes it. In installing, if the communication program 5 has already been installed, only the portion of the data 53 is stored in the personal computer 4. When a plurality of data 53 are stored in the personal computer 4, the user can click the character 6 to select and switch the type of character 6. When the character 6 is switched, referring to Fig. 3, an advertising message stored in the data 53 together with the character 6 newly displayed is displayed on a display section 61 in the form of a balloon. The character 6 is set to be displayed at the upper portion of a window AP of an active application: the character 6 is always located on the front side and is not hidden by other windows. The display section 61 is displayed for a predetermined time and automatically disappears. As an advertising message, the URL of the homepage of the company may be displayed on the display section 61. In this case, when the URL is clicked, a browser installed in the personal computer 4 in advance is activated to access the homepage of the company. The communication program 5 automatically accesses the server 3 every predetermined time set in the data 53, downloads latest data from the server 3, and updates the existing data 53. After that, the advertising message displayed on the display section 61 has the updated contents.

The communication program 5 may have a mail check function, periodically make a round to check whether mail addressed to the user is transmitted, and cause the display section 61 to display the result. In addition, a company sometimes holds an advertising campaign for a predetermined period. In this case, the data 53 contains use valid date data, and when the due date has expired, only the data 53 related to the company is inhibited to use or erased. The expiration of due date can be managed by the clock in the personal computer 4 or may be managed on the basis of the clock in the main server 2. The character 6 may have a launcher function. In addition, for example, when the personal computer 4 is used in an office, the character 6 may be set not to be displayed. The character 6 can be a still image. However, the character 6 may be displayed as a moving image by continuously playing a plurality of images. When response switches for YES and NO are displayed on the display section 61, each user can be questionnaired.

The character 6 shown in Fig. 3 is sitting on the top line of the window AP. When the interval between the top line of the screen of the monitor 41 and the top line of the window AP decreases to reduce the space for displaying the character 6, the character 6 is automatically moved to a side line SL or bottom line BL of the window.

To communicate advertising information to a larger number of users, it is important to install the communication program 5 in a larger number of personal computers 4. To do this, setting is made to input the personal data of each user in installing the communication program 5, and the personal data is transmitted to the main server 2. This enables an additional service that fortune-telling is done on the basis of the personal data, and the fortune-telling result is transmitted to the ID of the personal computer 4. Thus, the number of users who want to install the communication program 5 can be increased.

### Industrial Applicability

As is apparent from the above description, according to the present invention, in the advertising system using the communication network of the Internet, the advertising information receiving apparatus side automatically accesses the advertising information sending apparatus to receive advertising information, so the advertising information can be properly communicated to each user.

## Claims

1. An advertising system using the Internet, in which an advertising information sending apparatus and an advertising information receiving apparatus are connected through a communication network of the Internet, characterized in that the advertising information receiving apparatus comprises automatic login means for automatically accessing the advertising information sending apparatus at preset time to receive advertising information.

2. An advertising system using the Internet according to claim 1, characterized in that said automatic login means accesses a plurality of advertising information sending apparatuses connected to the Internet.

3. An advertising system using the Internet according to claim 2, characterized in that said advertising information sending apparatus transmits change information for changing settings for said automatic login means in sending the advertising information.

## Amended claims

### Amended claims under Art. 19.1 PCT

**1.** An advertising system using the Internet, in which an advertising information sending apparatus and an advertising information receiving apparatus are connected through a communication network of the Internet, characterized in that
the advertising information receiving apparatus comprises automatic login means for automatically accessing the advertising information sending apparatus at preset time to download through the Internet advertising information stored in the advertising information sending apparatus, and
on a monitor screen of the advertising information receiving apparatus, the advertising information downloaded by said automatic login means is displayed, together with a predetermined character, in a balloon accompanying the character.

**2.** An advertising system using the Internet according to claim 1, characterized in that
said automatic login means accesses a plurality of advertising information sending apparatuses connected to the Internet, and
the advertising information receiving apparatus has a plurality of characters corresponding to the plurality of advertising information sending apparatuses.

**3.** An advertising system using the Internet according to claim 1, characterized in that a URL of a homepage of a company of the advertising information sending apparatus is displayed in the balloon, and when the URL is selected, the homepage is accessed.

**4.** An advertising system using the Internet according to claim 1, characterized in that
said system comprises a main server connected to the Internet,
the advertising information receiving apparatus automatically accesses the advertising information sending apparatus at the preset time to transmit, to said main server, data related to a user who uses the advertising information sending apparatus, and
said main server stores the data related to the user, which is sent from the advertising information receiving apparatus.

**5.** An advertising system using the Internet according to claim 4, characterized in that
the advertising information receiving apparatus receives service data transmitted from said main server, and
on the monitor screen of the advertising information receiving apparatus, display by the service data is done, together with the predetermined character, in the balloon accompanying the character.
